# EUROPEAN PATENT APPLICATION

(11) **EP 4 585 459 A1**
(43) Date of publication of application: **16.07.2025**
(21) Application number: 25151453.5
(22) Date of filing: 13.01.2025
(51) Int. Cl.: B60N 2/28

(54) **SAFETY BELT ASSEMBLY AND CHILD CARRIER**

(30) Priority: 12.01.2024 CN 202410052425
(71) Applicant: Wonderland Switzerland AG, 6312 Steinhausen (CH)
(72) Inventor: Li, Ruyi, 523648 Guangdong (CN); Mo, Xiaolong, 523648 Guangdong (CN); Ning, Huan, 523648 Guangdong (CN)
(74) Representative: ERNICKE Patent- und Rechtsanwälte PartmbB

(57) **Abstract**

The present disclosure relates to a safety belt assembly (20) and a child carrier. The child carrier further includes a carrier body (10) and a safety belt assembly. The safety belt assembly (20) includes a safety belt body (100), a driving mechanism (200), and a reminder mechanism (300). The safety belt body (100) is configured to restrain a child to the carrier body (10) and is switchable between a tightened state and a slack state. The driving mechanism (200) is drivingly connected to the safety belt body (100). When the safety belt body (100) is in the tightened state, the driving mechanism (200) is linked to drive the reminder mechanism (300) to generate a reminder signal. The safety belt assembly and the child carrier can remind a caregiver to tighten the safety belt assembly (20) in place, thereby preventing under-tightening or over-tightening of a safety belt.

## Description

### Technical Field

The present disclosure relates to the field of child carrier technologies, and in particular, to a safety belt assembly and a child carrier.

### Background

Currently, a child carrier, for example, a child safety seat, is generally provided with a safety belt assembly. After a child is seated in the child carrier, the child can be restrained on the child carrier by the safety belt assembly to ensure travel safety. However, when the safety belt assembly on the market is used, the caregiver often cannot be sure whether the safety belt assembly is tightened in place, and it is easy for the safety belt assembly to be not tightened and lose a protective effect or the safety belt assembly to be over-tightened and strangle the child.

### Summary

Accordingly, it is necessary to provide a safety belt assembly and a child carrier. The safety belt assembly and the child carrier can remind a caregiver to tighten the safety belt assembly in place, thereby preventing under-tightening or over-tightening of a safety belt.

In an aspect of the present disclosure, a safety belt assembly applied to a child carrier is provided. The child carrier includes a carrier body. The safety belt assembly includes a safety belt body, a driving mechanism and a reminder mechanism. The safety belt body is configured to restrain a child to the carrier body and switchable between a tightened state and a slack state. The driving mechanism is drivingly connected to the safety belt body. when the safety belt body is switched to the tightened state, the driving mechanism is linked to is linked to drive, through the driving mechanism, drive the reminder mechanism to operate to cause the reminder mechanism to generate a reminder signal.

In an embodiment, the driving mechanism includes a pushing member, and when the safety belt body is switched to the tightened state, the driving mechanism is linked to push the reminder mechanism via the pushing member.

In an embodiment, the reminder mechanism includes a mounting base, a pushing sleeve and an engaging pin. The mounting base is fixed to the carrier body and provided with a limiting groove. The limiting groove has a first wall and a second wall. The pushing sleeve movably arranged in the mounting base and having a driving groove connected to the limiting groove. The engaging pin passing through the limiting groove and the driving groove and movable between a first position and a second position. The engaging pin abuts against the first wall when at the first position, and the engaging pin abuts against the second wall when at the second position. When the safety belt body is in the tightened state, the driving mechanism is linked to push the pushing sleeve along a first direction via the pushing member, so that the engaging pin moves from the first position to the second position, and the engaging pin hits the second wall and generates a reminder sound when moving to the second position.

In an embodiment, the reminder mechanism further includes a pushing rod, a first reset member and a second reset member. The pushing rod is rotatably and movably arranged in the pushing sleeve, and the engaging pin is fixed to one side of the pushing rod. The first reset member pushes against the pushing sleeve in a direction opposite to the first direction. The second reset member pushes against the pushing rod in the first direction.

In an embodiment, two sides of the pushing rod are each provided with the engaging pin. Two opposite sides of the mounting base are each provided with the limiting groove. Two opposite sides of the pushing sleeve are each provided with the driving groove. Each of the engaging pins passes through the limiting groove on the corresponding side and the driving groove on the corresponding side.

In an embodiment, the limiting groove is an L-shaped groove. The limiting groove includes a first groove portion and a second groove portion in communication with each other. A groove wall at an end of the first groove portion away from the second groove portion is a first wall. A groove wall at an end of the second groove portion away from the first groove portion is a second wall. The driving groove is an inclined groove. An extension direction of the first groove portion is interleaved with an extension direction of the driving groove. An extension direction of the second groove portion is interleaved with the extension direction of the driving groove.

In an embodiment, the driving mechanism further includes a rotating seat. The rotating seat is rotatably arranged on the carrier body and connected to the safety belt body. The pushing member is arranged on the rotating seat and rotates with the rotating seat. The rotating seat is rotatable between the first rotating position and the second rotating position. When the safety belt body is in the tightened statestate, the rotating seat is at the first rotating position; and when the safety belt body is in the slack state, the rotating seat is at the second rotating position.

In an embodiment, the driving mechanism further includes a mounting rack. The mounting rack is fixed to the carrier body. The rotating seat includes a rotating disk and a connecting rod fixed to an outer periphery of the rotating disk. The rotating disk is pivotally connected to the mounting rack via a pivot shaft. The pushing member is arranged on the outer periphery of the rotating disk and is spaced apart from the connecting rod.

In an embodiment, the driving mechanism further includes a third reset member. The third reset member sleeves the pivot shaft and two ends of the third reset member abut against the rotating disk and the mounting rack respectively. The third reset member causes the rotating seat to move towards the second rotating position.

In an embodiment, the safety belt body includes a shoulder belt and a crotch belt. One end of the crotch belt is connected to the shoulder belt, and the other end of the crotch belt is connected to the rotating seat. When the crotch belt is in a tightened state, the rotating seat is at the first rotating position, and the pushing member pushes the reminder mechanism to cause the reminder mechanism to generate a reminder signal; and when the crotch belt is in a slack state, the rotating seat is at the second rotating position, and the pushing member is spaced apart from the reminder mechanism.

In an embodiment, the reminder mechanism further includes a first indicator, a second indicator and a mounting base. The first indicator and the second indicator are arranged on the rotating seat and rotating with the rotating seat. The mounting base is fixedly arranged on the carrier body and has an indication window. When the rotating seat is at the first rotating position, the first indicator is opposite to the indication window; and when the rotating seat is at the second rotating position, and the second indicator is opposite to the indication window.

In an embodiment, the safety belt body includes a connecting belt and a fixed buckle. One end of the connecting belt is fixed to the fixed buckle. The pushing member is arranged on the fixed buckle. The reminder mechanism includes a limiting sleeve and a jacking member. The limiting sleeve is fixedly arranged on the carrier body. The jacking member is arranged in the limiting sleeve and movable between a third position and a fourth position. When the connecting belt is in a tightened state, the driving mechanism is linked to push the jacking member along a second direction via the pushing member, so that the jacking member moves from the third position to the fourth position, and the jacking member hits the limiting sleeve and generates a reminder sound when moving to the fourth position.

In an embodiment, the limiting sleeve is provided with a jacking slope and a hitting portion. The jacking member has an elastic rib. When the jacking member moves from the third position to the fourth position, the elastic rib jacks the jacking slope and deforms, and when the jacking member moves to the fourth position, the elastic rib hits the hitting portion and generates a reminder sound.

In an embodiment, the driving mechanism further includes a fourth reset assembly. The fourth reset assembly causes the jacking member to move in a direction opposite to the second direction.

In an embodiment, the fourth reset assembly includes a first elastic member and a second elastic member. Two ends of the first elastic member abut against the fixed buckle and the carrier body respectively. Two ends of the second elastic member abut against the jacking member and the limiting sleeve respectively.

In an embodiment, the connecting belt includes at least one of a shoulder belt body, a crotch belt body, and a waist belt body.

In an embodiment, the driving mechanism includes a rotating seat. The rotating seat is rotatably arranged on the carrier body and connected to the safety belt body. The rotating seat is rotatable between a first rotating position and a second rotating position. The reminder mechanism includes a first indicator, a second indicator and a mounting base. The first indicator and the second indicator are arranged on the rotating seat and rotating with the rotating seat. The mounting base fixedly arranged on the carrier body and having an indication window; When the safety belt body is in the tightened state, the rotating seat is at the first rotating position, and the first indicator is opposite to the indication window; and when the safety belt body is in the slack state, the rotating seat is at the second rotating position, and the second indicator is opposite to the indication window.

In another aspect of the present disclosure, a child carrier is provided, which includes a carrier body and the safety belt assembly according to any one of the above embodiments.

### Brief description of the drawings

FIG. 1 is a schematic diagram of a child carrier according to a first embodiment of the present disclosure, where a rotating seat is at a first rotating position;
FIG. 2 is a schematic diagram of the child carrier shown in FIG. 1, where a shoulder belt, a waist belt, and an adjustment belt are removed and the rotating seat is at a second rotating position;
FIG. 3 is a schematic diagram of the child carrier shown in FIG. 1, where the shoulder belt, the waist belt, and the adjustment belt are removed and the rotating seat is at the first rotating position;
FIG. 4 is a schematic diagram of a crotch belt, a driving mechanism, and a reminder mechanism in the child carrier shown in FIG. 2 and a portion of FIG. 4 marked in a broken line is shown by an enlarged view;
FIG. 5 is a schematic diagram of a crotch belt, a driving mechanism, and a reminder mechanism in the child carrier shown in FIG. 3 and a portion of FIG. 5 marked in a broken line is shown by an enlarged view;
FIG. 6 is a sectional view taken along a line A-A shown in FIG. 4;
FIG. 7 is a sectional view taken along a line B-B shown in FIG. 5;
FIG. 8 is an exploded view of FIG. 5 and a portion of FIG. 8 marked in a broken line is shown by an enlarged view;
FIG. 9 is a schematic diagram of the child carrier shown in FIG. 1 from another perspective where a carrier base and a safety belt body are removed, and a portion of FIG. 9 marked in a broken line is shown by an enlarged view;
FIG. 10 is a schematic diagram of a mounting base shown in FIG. 8;
FIG. 11 is a partial exploded view of the child carrier shown in FIG. 9 where the carrier base and the safety belt body are removed;

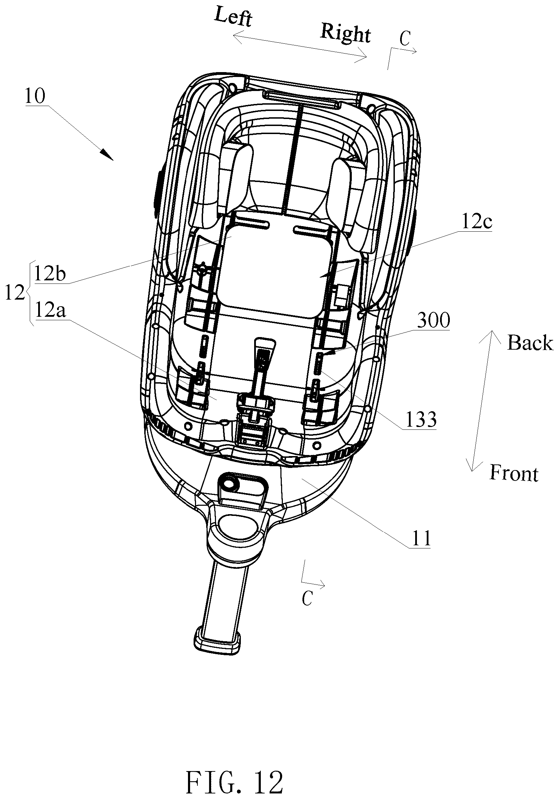

FIG. 12 is a schematic diagram of a child carrier according to a third embodiment of the present disclosure, where a shoulder belt, a waist belt, and an adjustment belt are removed;
FIG. 13 is a schematic diagram of the child carrier in FIG. 12 from another perspective where a carrier base is removed and a portion of FIG. 13 marked in a broken line is shown by an enlarged view;
FIG. 14 is a partial exploded view of the child carrier shown in FIG. 12;
FIG. 15 is a sectional view taken along a line C-C shown in FIG. 12 and a portion of FIG. 15 marked in a broken line is shown by an enlarged view;
FIG. 16 is a sectional view taken along a line C-C shown in FIG. 12 from a side-view perspective where a jacking member is at a third position, and a portion of FIG. 16 marked in a broken line is shown by an enlarged view;
FIG. 17 is a sectional view taken along a line C-C shown in FIG. 12 from a side-view perspective where the jacking member is at a fourth position and a portion of FIG. 17 marked in a broken line is shown by an enlarged view;
FIG. 18 is a schematic diagram of a fixed buckle and a pushing member in the child carrier shown in FIG. 14;
FIG. 19 is a schematic diagram of a limiting sleeve in the child carrier shown in FIG. 14; and
FIG. 20 is a schematic diagram of the jacking member in the child carrier shown in FIG. 14.

### Detailed description of the embodiments

In order to make the objectives, technical solutions, and advantages of the present disclosure clearer, the present disclosure will be further described in detail below with reference to the accompanying drawings and specific implementations. It should be understood that the specific implementations described herein are only used to explain the present disclosure and do not limit the protection scope of the present disclosure.

It is to be noted that when one element is referred to as being "fixed to" another element, it may be directly disposed on the another element or an intermediate element may exist. When one element is considered to be "connected to" another element, it may be directly connected to the another element or an intermediate element may co-exist. The terms "vertical", "horizontal", "left", "right" and similar expressions used herein are for illustrative purposes only and do not represent the only implementation.

Unless defined otherwise, all technical and scientific terms used herein have the same meanings as would generally understood by those skilled in the technical field of the present disclosure. The terms used herein in the specification of the present disclosure are for the purpose of describing specific embodiments only, and are not intended to limit the present disclosure. The term "and/or" used herein includes any and all combinations of one or more related listed items.

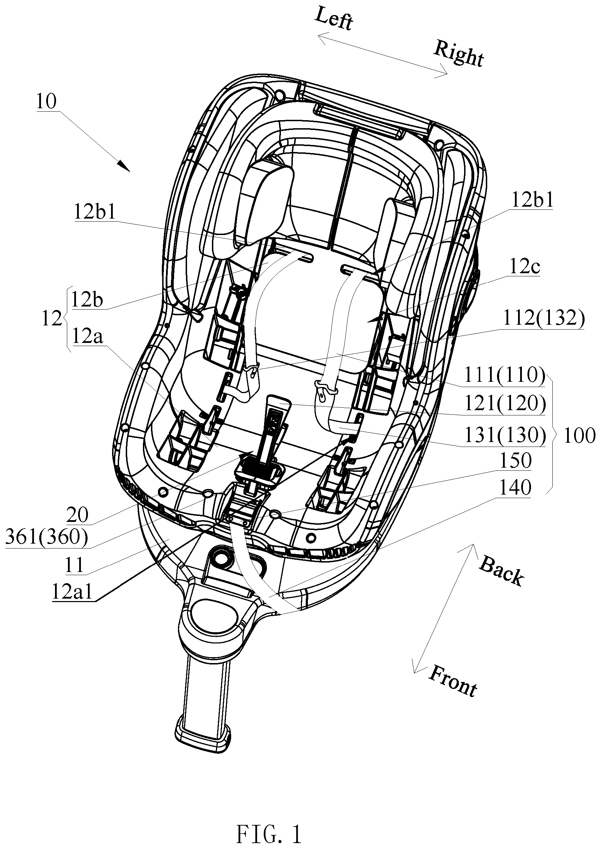

As shown in FIG. 1, an embodiment of the present disclosure provides a child carrier, which may be, for example, a car safety seat, a baby carrier, a stroller, or the like. The child carrier includes a carrier body 10 and a safety belt assembly 20 mounted on the carrier body 10. The safety belt assembly 20 and the child carrier can remind a caregiver to tighten the safety belt assembly 20 in place, thereby preventing under-tightening or over-tightening of a safety belt. The structure of the child carrier is described in detail below based on an example in which the child carrier is a car safety seat.

As shown in FIG. 1, the carrier body 10 may include a carrier base 11 and a seat body 12. The carrier base 11 is configured to be mounted and fixed to a car seat. The seat body 12 is detachably or non-detachably mounted on the carrier base 11. The seat body 12 includes a seat portion 12a and a backrest portion 12b connected to each other. A seating space 12c configured to accommodate a child is formed between the seat portion 12a and the backrest portion 12b. The safety belt assembly 20 is mounted on the seat body 12.

Specifically, as shown in FIG. 1 to FIG. 3, the safety belt assembly 20 includes a safety belt body 100, a driving mechanism 200, and a reminder mechanism 300. The safety belt body 100 is configured to restrain a child to the carrier body 10 and is switchable between a tightened state and a slack state. The driving mechanism 200 is drivingly connected to the safety belt body 100. The reminder mechanism 300 is connected to the driving mechanism 200. When the safety belt body 100 is in the tightened state, the driving mechanism 200 is linked to drive, the reminder mechanism 300 to generate a reminder signal.

In this embodiment, as shown in FIG. 1, the safety belt body 100 may include a shoulder belt 110, a crotch belt 120, a waist belt 130, and an adjustment belt 140. Each of the shoulder belt 110, the crotch belt 120, and the waist belt 130 includes a corresponding connecting belt and a corresponding connecting buckle. That is, the shoulder belt 110 includes a shoulder belt body 111 and a shoulder belt buckle 112, the crotch belt 120 includes a crotch belt body 121 and a crotch belt buckle (not shown), and the waist belt 130 includes a waist belt body 131 and a waist belt buckle 132. Two shoulder belts 110 and two waist belts 130 are spaced apart and are provided respectively on left and right sides of the seat body 12. The two shoulder belts 110 are configured to restrain two shoulders of the child. The two waist belts 130 are configured to restrain the waist of the child. In this embodiment, the shoulder belt body 111 of each shoulder belt 110 and the waist belt body 131 of the waist belt 130 on the corresponding side are directly connected to each other, and the shoulder belt buckle 112 of each shoulder belt 110 and the waist belt buckle 132 of the waist belt 130 on the corresponding side are actually a same component. The shoulder belt buckle 112 (or the waist belt buckle 132) sleeves a junction of the shoulder belt body 111 and the waist belt body 131 to distinguish the shoulder belt body 111 from the waist belt body 131. An end of the shoulder belt body 111 away from the shoulder belt buckle 112 (or the waist belt buckle 132) extends to a back surface of the backrest portion 12b through a first penetration hole 12b1 on the backrest portion 12b, and an end of the waist belt body 131 away from the shoulder belt buckle 112 (or the waist belt buckle 132) is fixed to a back surface of the seat portion 12a through a second penetration hole 12a1 in the seat portion 12a. In other embodiments, the shoulder belt body 111 and the waist belt body 131 on the corresponding side may alternatively be connected through a corresponding buckle. The two belt buckles 112 (or waist belt buckles 132) both can be detachably fastened to the crotch belt buckle. An end of the crotch belt 120 away from the two belt buckles 112 (or waist belt buckles 132) is connected to the driving mechanism 200. The crotch belt 120 is configured to restrain the crotch of the child. One end of the adjustment belt 140 is fixed to a front end of the seat portion 12a through a length adjustment mechanism 150 and is located in front of the driving mechanism 200. The other end of the adjustment belt 140 goes around a bottom surface of the seat portion 12a and extends to the back surface of the backrest portion 12b to be connected to ends of the two shoulder belt bodies 111 away from the two belt buckles 112 (or waist belt buckles 132). In this embodiment, the length adjustment mechanism 150 is switchable between a locked state and an unlocked state. When the length adjustment mechanism 150 is in the unlocked state, a length of the adjustment belt 140 may be shortened. When the length adjustment mechanism 150 is in the locked state, the length of the adjustment belt 140 can only be extended.

It is to be noted that the directional terms related to front, back, left, and right as referred to in the context of the present disclosure are based on orientations of the car safety seat shown in FIG. 1. Specifically, after the child is seated in the car safety seat, a direction the child faces is the front, a direction the child faces away from is the back, a left side of a reader when facing the car safety seat is the left, and a right side of the reader when facing the car safety seat is the right.

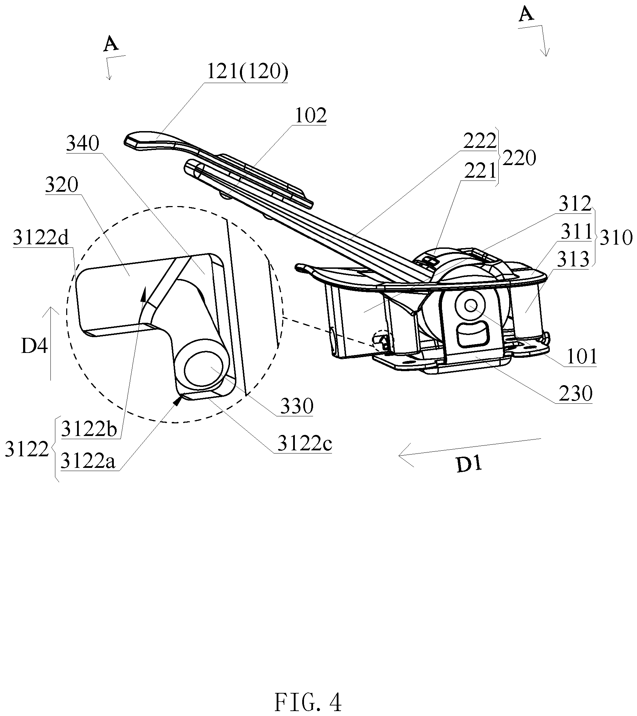

Optionally, the driving mechanism 200 and the corresponding reminder mechanism 300 may be in a variety of forms. For example, in the first embodiment, as shown in FIG. 4 to FIG. 7, the driving mechanism 200 may include a pushing member 210, a rotating seat 220, a mounting rack 230, and a third reset member 240, the reminder mechanism 300 may include a mounting base 310, a pushing sleeve 320, an engaging pin 330, a pushing rod 340, a first reset member 351, and a second reset member 352, and the safety belt assembly 20 including the driving mechanism 200 and the reminder mechanism 300 in this embodiment is arranged on the crotch belt 120.

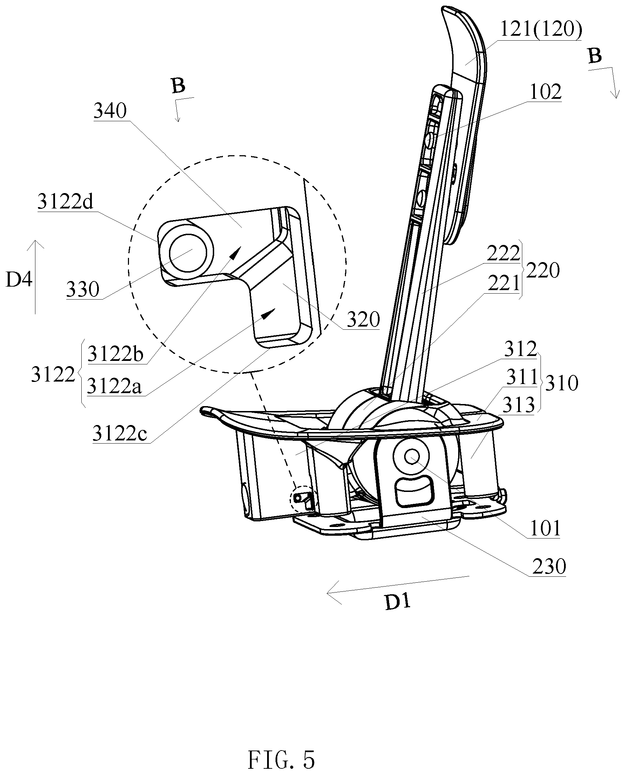

Specifically, as shown in FIG. 4 and FIG. 5, the rotating seat 220 is rotatably arranged on the carrier body 10. The rotating seat 220 includes a substantially cylindrical rotating disk 221 and a connecting rod 222 fixed to an outer periphery of the rotating disk 221. An end of the connecting rod 222 away from the rotating disk 221 is connected to an end of the crotch belt body 121 away from the crotch belt buckle. In this embodiment, the crotch belt body 121 is made of a plastic material, and the crotch belt body 121 is connected to the connecting rod 222 through two fasteners 102 such as screws.

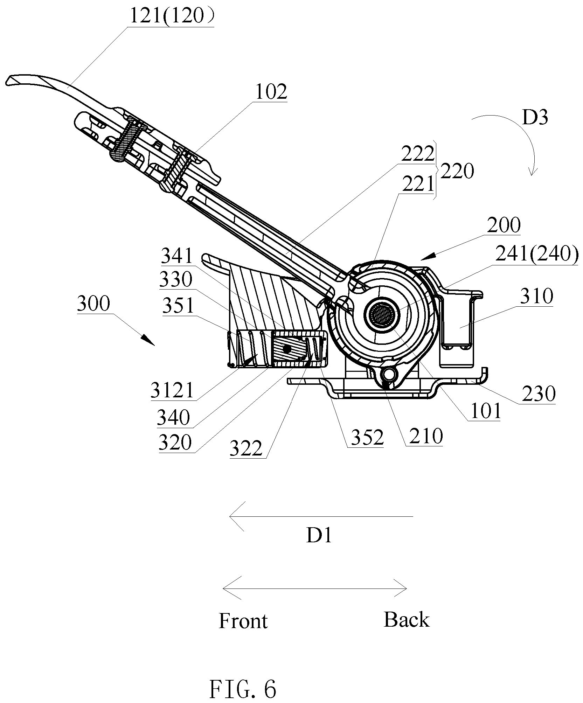

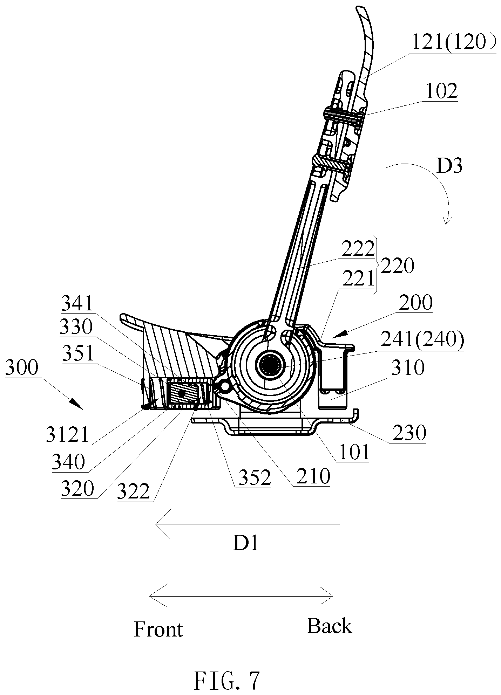

As shown in FIG. 6 and FIG. 7, the pushing member 210 is convexly arranged on an outer periphery of the rotating seat 220 and is spaced apart from the connecting rod 222. The rotating seat 220 is rotatable between a first rotating position and a second rotating position. When the safety belt body 100 is in the tightened state (i.e., the safety belt body 100 is in a just-tightened state, in which case the safety belt body 100 can play a role in safety protection without strangling the child and causing discomfort), as shown in FIG. 7, the rotating seat 220 is at the first rotating position, and the pushing member 210 pushes the reminder mechanism 300 to generate a reminder signal. When the safety belt body 100 is in the slack state, as shown in FIG. 6, the rotating seat 220 is at the second rotating position, and the pushing member 210 is spaced apart from the reminder mechanism 300. In this embodiment, as shown in FIG. 1 to FIG. 3, "the safety belt body 100 is in the tightened state" specifically means that after the child is seated on the seat body 12, the shoulder belt buckle 112 and the crotch belt buckle are fastened, and then the adjustment belt 140 is pulled by the length adjustment mechanism 150, so that the adjustment strap 140 pulls the crotch belt body 121 via the shoulder belt body 111 to rotate. The crotch belt body 121 drives the rotating seat 220 to rotate, so that the rotating seat 220 rotates from the second rotating position as shown in FIG. 6 to the first rotating position as shown in FIG. 7, thereby enabling the pushing member 210 to push the reminder mechanism 300 to cause the reminder mechanism 300 to generate a reminder signal.

Specifically, as shown in FIG. 6 to FIG. 8, the mounting rack 230 of the driving mechanism 200 includes a first mounting plate 231 and a second mounting plate 232 that are oppositely arranged and a connecting plate 233 connected between the first mounting plate 231 and the second mounting plate 232. The connecting plate 233 is fixed to the carrier body 10, and the rotating disk 221 is pivotally connected between the first mounting plate 231 and the second mounting plate 232 through the pivot shaft 101 passing through a central axis thereof. In this embodiment, the third reset member 240 is a torsional spring and includes a sleeve tube 241 and a first abutment end 242 and a second abutment end 243 extending from the sleeve tube 241. The sleeve tube 241 of the third reset member 240 sleeves the pivot shaft 101. Moreover, the first abutment end 242 and the second abutment end 243 abut against the rotating disk 221 and the mounting rack 230 respectively, and the third reset member 240 constantly moves the rotating seat 220 to the second rotating position. In this way, after the shoulder belt buckle 112 is unfastened from the crotch belt buckle, the rotating seat 220 can automatically turn to the second rotating position under an elastic restoring force of the second reset member 352 to facilitate taking the child out of the seat body 12.

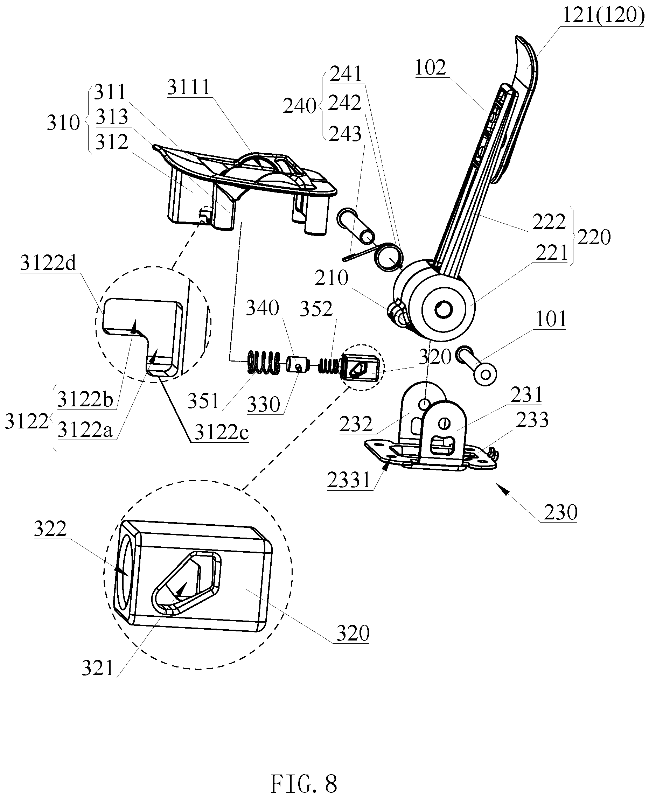

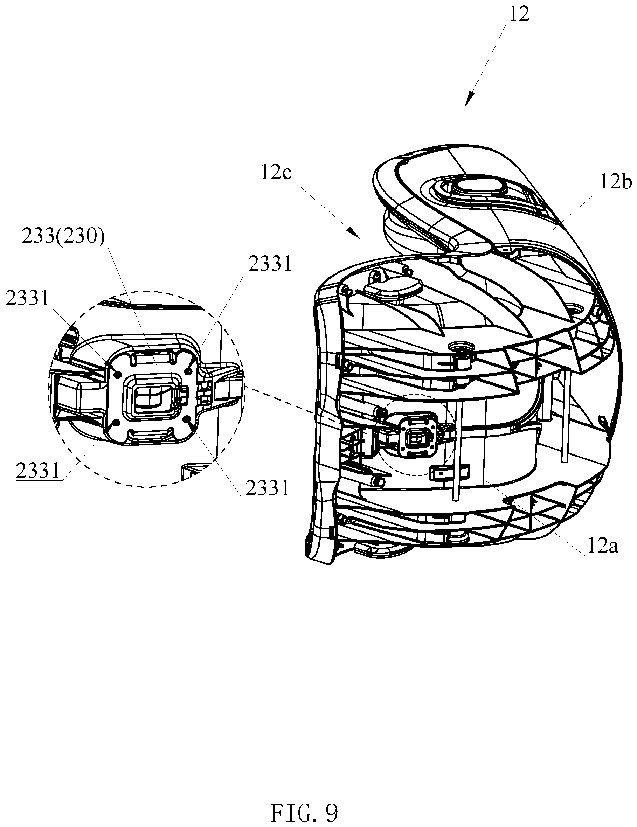

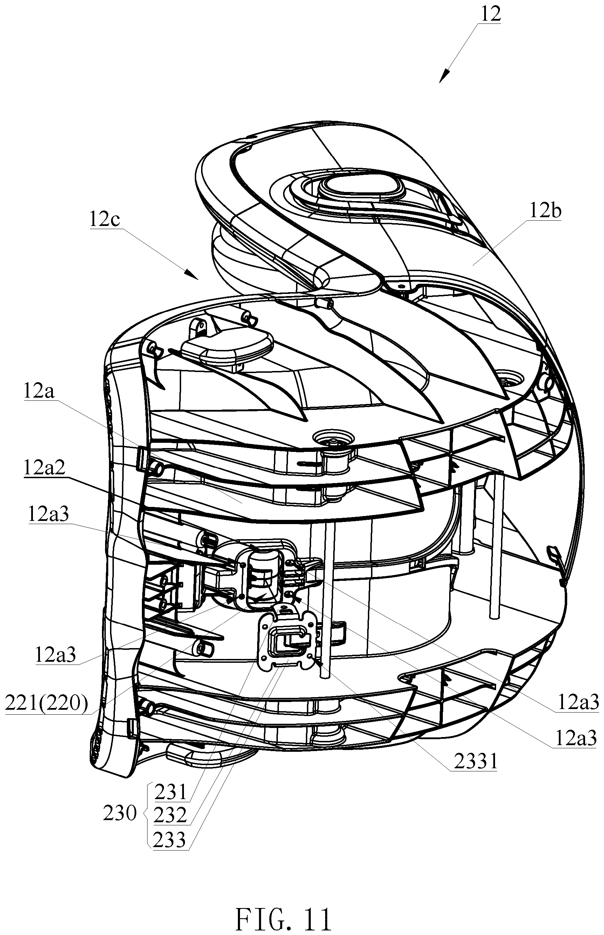

Specifically, as shown in FIG. 8, the mounting base 310 of the reminder mechanism 300 includes a fixed plate 311 and a mounting body 312 and a plurality of fixed columns 313 fixed on one surface of the fixed plate 311. In this embodiment, referring to FIG. 9 to FIG. 11 together, the seat portion 12a of the carrier body 10 is provided with a mounting groove 12a2 passing through the seat portion 12a and a plurality of through holes 12a3 arranged around the seat portion 12a. The fixed plate 311 has an indication window 3111 and the plurality of fixed columns 313 are arranged around the indication window 3111. The mounting base 310 is arranged on a top surface of the seat portion 12a, that is, a surface of the seat portion 12a facing the seating space 12c. The indication window 3111 is opposite to the mounting groove 12a2, and the plurality of fixed columns 313 are opposite to the plurality of through holes 12a3. Each fixed column 313 is provided with a fixed hole 3131 opposite to and in communication with the corresponding through hole 12a3. The connecting plate 233 of the mounting rack 230 of the driving mechanism 200 is arranged on a bottom surface of the seat portion 12a, that is, a surface of the seat portion 12a facing away from the seating space 12c. Both the first connecting plate 233 and the second connecting plate 233 extend into the mounting groove 12a2. A plurality of via holes 2331 are provided in the connecting plate 233 and are in one-to-one correspondence to the plurality of through holes 12a3 in the seat portion 12a. A plurality of fasteners 102 such as screws sequentially pass through the plurality of via holes 2331 in the connecting plate 233, the plurality of through holes 12a3 in the seat portion 12a, and the plurality of fixed holes in the plurality of fixed columns 313 respectively to fix the mounting base 310 and the mounting rack 230 respectively to the seat portion 12a (i.e., the carrier body 10).

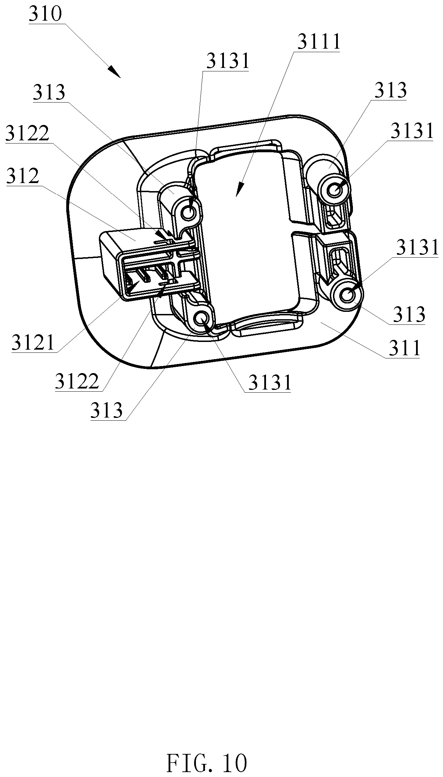

As shown in FIG. 10 to FIG. 11, the mounting body 312 is generally located on a front side of the indication window 3111, and the mounting body 312 has a roughly rectangular structure. A side surface of the mounting body 312 close to the indication window 3111 is provided with a first receiving groove 3121. Limiting grooves 3122 in communication with the first receiving groove 3121 are respectively provided on left and right sides of the mounting body 312. In this embodiment, as shown in FIG. 8 and FIG. 10, the limiting grooves 3122 on the left and right sides of the mounting body 312 are both L-shaped grooves. The limiting groove 3122 on the right side of the mounting body 312 and the limiting groove 3122 on the left side of the mounting body 312 form an axially symmetrical pattern. The structure of the limiting groove 3122 is specifically described below by taking the limiting groove 3122 on the right side of the mounting body 312 in FIG. 8 as an example. The L-shaped limiting groove 3122 includes a first groove portion 3122a and a second groove portion 3122b that are intercommunicated and substantially perpendicular to each other. The second groove portion 3122b is located above the first groove portion 3122a, the second groove portion 3122b extends generally in a horizontal direction, and the first groove portion 3122a generally extends in a vertical direction. A groove wall at an end of the first groove portion 3122a away from the second groove portion 3122b, that is, a groove wall at a bottom end of the first groove portion 3122a, is a first wall 3122c. A groove wall at an end of the second groove portion 3122b away from the first groove portion 3122a, that is, a groove wall at a front end of the first groove portion 3122a, is a second wall 3122d.

As shown in FIG. 6 to FIG. 8, the pushing sleeve 320 of the reminder mechanism 300 is movably arranged in the first receiving groove 3121. The pushing sleeve 320 has a roughly rectangular structure. A side of the pushing sleeve 320 facing away from a notch of the first receiving groove 3121, that is, a front side of the pushing sleeve 320, is provided with a second receiving groove 322. An extension direction of the second receiving groove 322 is generally arranged along a front-rear direction of the carrier body 10. Driving grooves 321 in communication with the second receiving groove 322 are respectively provided on left and right sides of the pushing sleeve 320. In this embodiment, the two driving grooves 321 are both inclined grooves that can be in communication with the limiting grooves 3122 on the corresponding sides. The following relationship also exists between each driving groove 321 and the limiting groove 3122 on the corresponding side. That is, an extension direction of the first groove portion 3122a of the limiting groove 3122 is interleaved with an extension direction of the driving groove 321, and an extension direction of the second groove portion 3122b of the limiting groove 3122 is interleaved with the extension direction of the driving groove 321.

As shown in FIG. 4, FIG. 5, and FIG. 8, the pushing rod 340 of the reminder mechanism 300 is rotatable and is movably arranged in the pushing sleeve 320. The pushing rod 340 has a roughly cylindrical structure, and a central axis of the pushing rod 340 is generally arranged along the front-rear direction of the carrier body 10. Two engaging pins 330 are spaced apart on a side wall of the pushing rod 340 respectively, and the two engaging pins 330 are arranged along a same radial direction of the pushing rod 340. In other embodiments, alternatively, only one engaging pin 330 is provided, and the engaging pin 330 passes through the side wall of the pushing rod 340 along a radial direction of the pushing rod 340. Each engaging pin 330 sequentially passes through the driving groove 321 and the limiting groove 3122 and is movable between a first position and a second position. The engaging pin 330 abuts against the first wall 3122c when at the first position. The engaging pin 330 abuts against the second wall 3122d when at the second position. In this way, when the safety belt body 100 is in the tightened state, the crotch belt body 121 drives the rotating seat 220 to the first rotating position, so that the pushing member 210 arranged on the rotating seat 220 pushes the pushing sleeve 320 along a first direction D to move the engaging pin 330 from the first position to the second position, and the engaging pin 330 hits the second wall 3122d and generates a reminder sound when moving to the second position.

As shown in FIG. 6 to FIG. 8, the first reset member 351 may be a spring, and the first reset member 351 constantly pushes against the pushing sleeve 320 in a direction opposite to the first direction D1. Specifically, two ends of the first reset member 351 abut against the mounting base 310 and the pushing sleeve 320 respectively. In this embodiment, a front end of the first reset member 351 abuts against a groove bottom of the first receiving groove 3121, and a rear end of the second reset member 352 abuts against a front end of the pushing sleeve 320. In this way, the first reset member 351 causes the pushing sleeve 320 to have a tendency to move in the direction opposite to the first direction D1. The second reset member 352 may alternatively be a spring, and the second reset member 352 constantly pushes against the pushing rod 340 in the first direction D1. Specifically, two ends of the second reset member 352 abut against the pushing rod 340 and the pushing sleeve 320 respectively. In this embodiment, a side of the pushing rod 340 facing a groove bottom of the second receiving groove 322 is provided with a sleeve column 341, a front end of the second reset member 352 sleeves the sleeve column 341 and abuts against the pushing rod 340, and the rear end of the second reset member 352 abuts against the groove bottom of the second receiving groove 322. In this way, the second reset member 352 causes the pushing rod 340 to have a tendency to move in the first direction D1.

In this way, after the shoulder belt buckle 112 is fastened to the crotch belt buckle, the adjustment belt 140 is tightened via the length adjustment mechanism 150, so that the adjustment belt 140 drives, via the shoulder belt body 111, the crotch belt body 121 to rotate. After the crotch belt body 121 drives the rotating seat 220 to the first rotating position, as shown in FIG. 6 to FIG. 7, the pushing member 210 arranged on the rotating seat 220 rotates along a third direction D3 to abut against the pushing sleeve 320 to move along the first direction D1, and the first reset member 351 elastically deforms. At the same time, as shown in FIG. 4 and FIG. 5, the pushing sleeve 320 drives the pushing rod 340 to rotate through coordination between the driving groove 321 and the engaging pin 330, and at the same time, drives the pushing rod 340 to move relative to the pushing sleeve 320 in the direction opposite to the first direction D1. The second reset member 352 elastically deforms. Taking the engaging pin 330 arranged on the right side of the pushing rod 340 as an example, the engaging pin 330 moves upwards under a limiting effect of the driving groove 321, that is, moves in a fourth direction D4, so that the engaging pin 330 that is originally in the first position and abuts against the first wall 3122c moves along the fourth direction D4 until it is detached from the first groove portion 3122a and enters the second groove portion 3122b. Since the first groove portion 3122a extends horizontally forward, the engaging pin 330, which loses a side wall limiting effect of the first wall 3122c, moves along the first direction D1 under an elastic force of the second reset member 352 and collides with the second wall 3122d to generate a reminder signal similar to a "click" sound, thereby reminding parents that the safety belt body 100 has been tightened in place.

After the shoulder belt buckle 112 is unfastened from the crotch belt buckle or the adjustment belt 140 is adjusted so that the shoulder belt body 111 is stretched and relaxed, as shown in FIG. 7 to FIG. 6, the rotating seat 220 is reset to the second rotating position under the action of the third reset member 240, so that the pushing member 210 arranged on the rotating seat 220 rotates in a direction opposite to the third direction D3 until it is no longer pushed by the pushing sleeve 320. That is, the pushing member 210 is spaced apart from the pushing sleeve 320. In this way, the pushing sleeve 320 is reset along the direction opposite to the first direction D1 under the elastic force of the first reset member 351, the pushing sleeve 320 drives the pushing rod 340 to rotate through coordination between the driving groove 321 and the engaging pin 330, and at the same time, the pushing rod 340 moves relative to the pushing sleeve 320 in the first direction D1. Taking the engaging pin 330 arranged on the right side of the pushing rod 340 as an example, as shown in FIG. 5 to FIG. 4, the engaging pin 330 moves obliquely downwards under the limiting effect of the driving groove 321, that is, moves in the direction opposite to the fourth direction D4. Since the pushing sleeve 320 moves relative to the mounting base 310 along the direction opposite to the first direction D1, the engaging pin 330 also moves relative to the mounting base 310 along the direction opposite to the first direction D1 until it is detached from the second groove portion 3122b and enters the first groove portion 3122a, and finally abuts against the first wall 3122c.

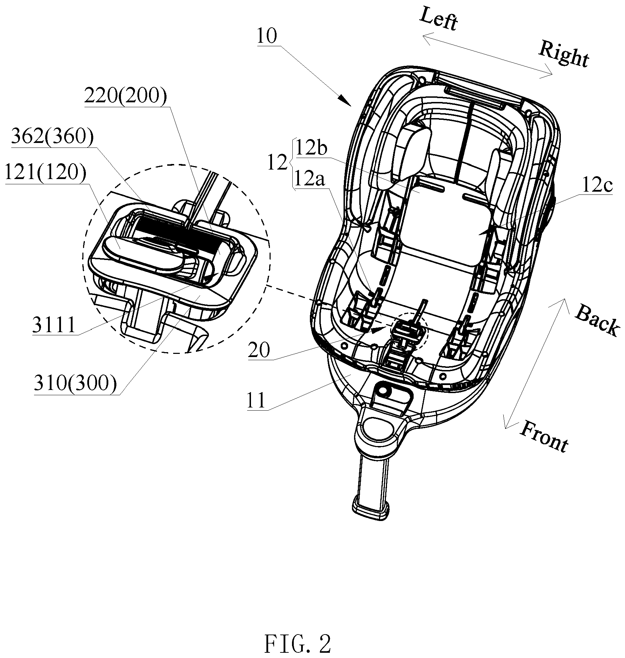

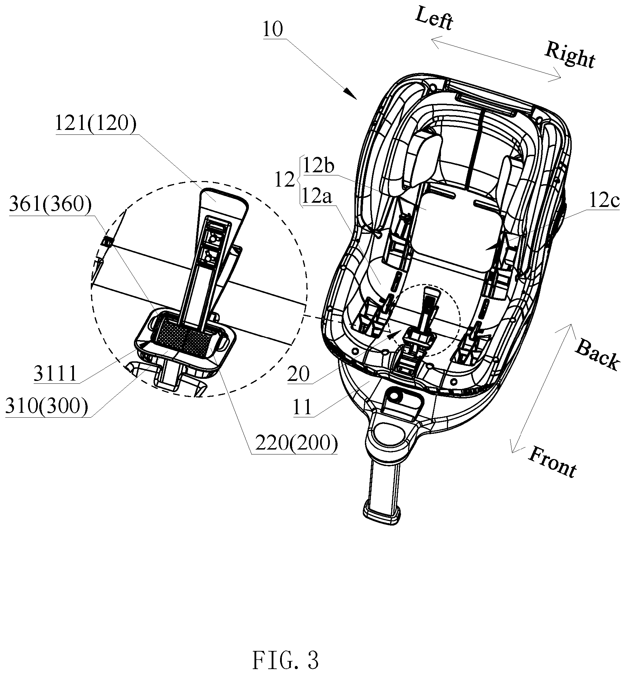

Further, as shown in FIG. 2 and FIG. 3, the reminder mechanism 300 in this embodiment may further include a first indicator 361 and a second indicator 362. The first indicator 361 and the second indicator 362 are both arranged on the rotating seat 220 and rotate with the rotating seat 220. Specifically, the first indicator 361 and the second indicator 362 may respectively be indication blocks of different colors or patterns imprinted on a side wall of the rotating disk 221 of the rotating seat 220. For example, the first indicator 361 may be a green indication block, and the second indicator 362 may be a red indication block. When the rotating seat 220 is at the first rotating position, the first indicator 361 is opposite to the indication window 3111 on the mounting base 310. When the rotating seat 220 is at the second rotating position, the second indicator 362 is opposite to the indication window 3111 on the mounting base 310. In this way, it can further serve to remind the caregiver whether the safety belt body 100 has been tightened in place.

In the second embodiment, the driving mechanism 200 may alternatively include only the rotating seat 220 in the first embodiment above, and the reminder mechanism 300 may alternatively include only the mounting base 310, the first indicator 361, and the second indicator 362 in the first embodiment above. When the safety belt body 100 is in the tightened state, the rotating seat 220 is at the first rotating position, and the first indicator 361 is opposite to the indication window 3111 to serve as a reminder signal indicating that the safety belt body 100 has been tightened in place. When the safety belt body 100 is in the slack state, the rotating seat 220 is at the second rotating position, and the second indicator 362 is opposite to the indication window 3111 to serve as a reminder signal indicating that the safety belt body 100 is not tightened in place.

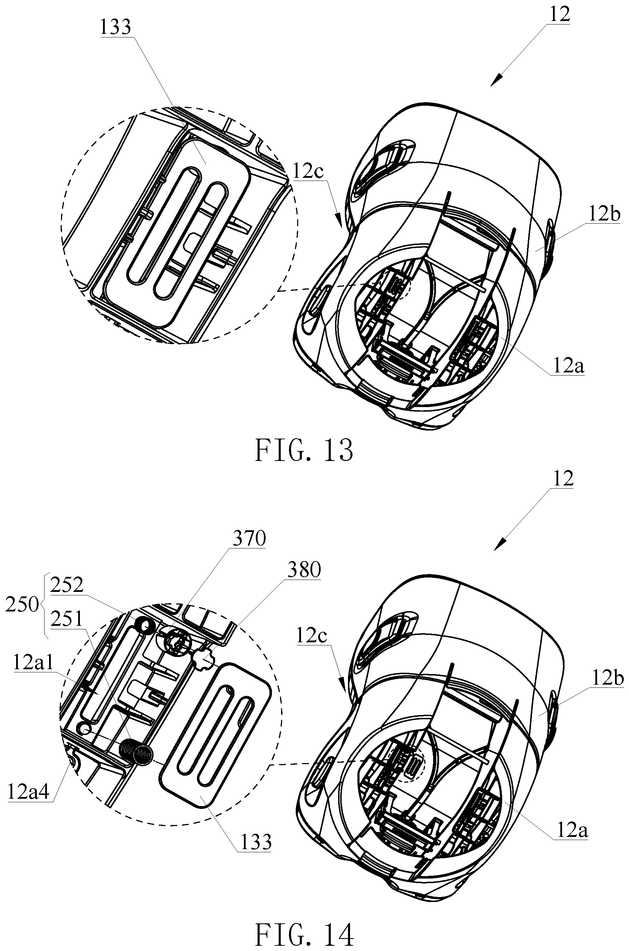

In the third embodiment, as shown in FIG. 13 to FIG. 15, the driving mechanism 200 may include a pushing member 210 and a fourth reset assembly 250, the reminder mechanism 300 may include a limiting sleeve 370 and a jacking member 380, and the safety belt assembly 20 including the driving mechanism 200 and the reminder mechanism 300 in this embodiment may be arranged on the shoulder belt 110, the crotch belt 120, or the waist belt 130. Description is specifically provided below based on an example in which the safety belt assembly 20 including the driving mechanism 200 and the reminder mechanism 300 in this embodiment is arranged on one waist belt 130.

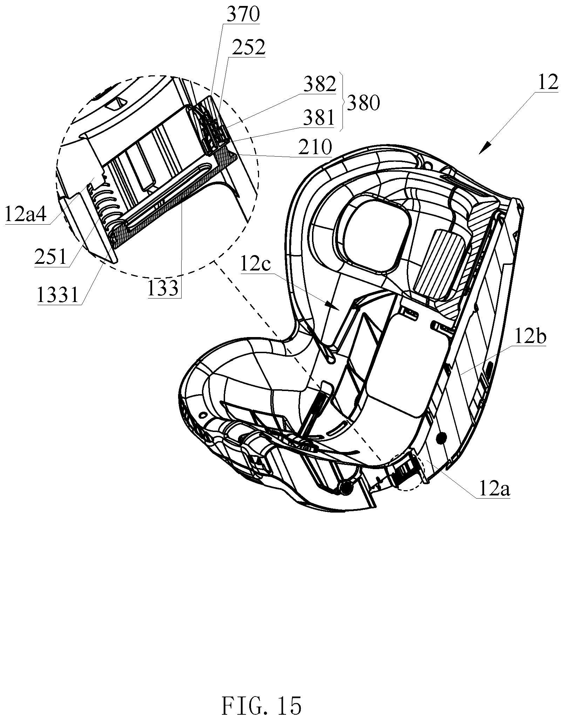

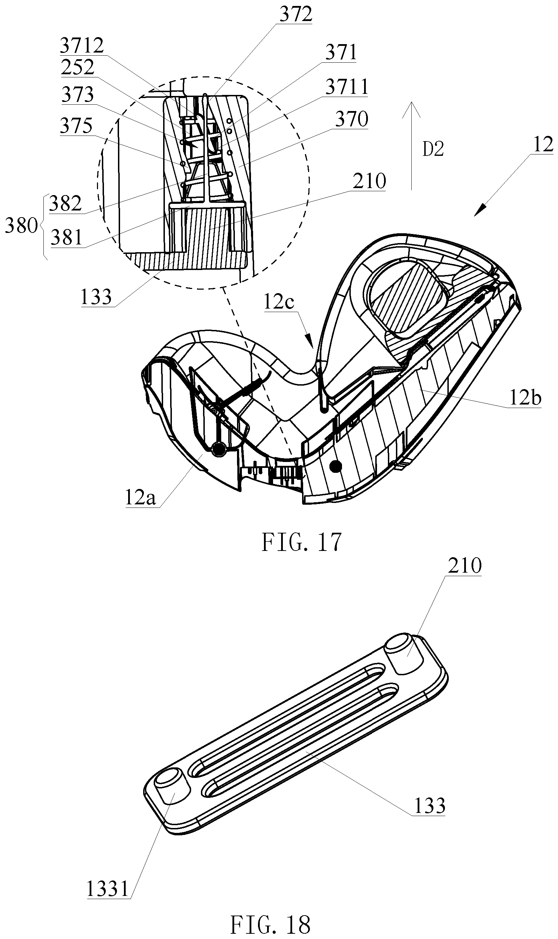

The waist belt 130 includes a waist belt body 131 (which may alternatively be another connecting belt, is the shoulder belt body 111 if used in the shoulder belt 110, or is the crotch belt body 121 if used in the crotch belt 120) and a fixed buckle 133 (as shown in FIG. 13 and FIG. 14). In this embodiment, the fixed buckle 133 is a tri-glide button and is movably arranged on a bottom surface of the seat portion 12a. An end of the waist belt body 131 away from the shoulder belt body 111 is wound around and fixed to the fixed buckle 133. As shown in FIG. 15 and FIG. 18, the pushing member 210 has a roughly cylindrical structure and protrudes from a side of the fixed buckle 133 facing the seat portion 12a. A surface of the fixed buckle 133 facing the seat portion 12a is further provided with a limiting column 1331, and the limiting column 1331 and the pushing member 210 are respectively spaced apart on two end portions of the fixed buckle 133.

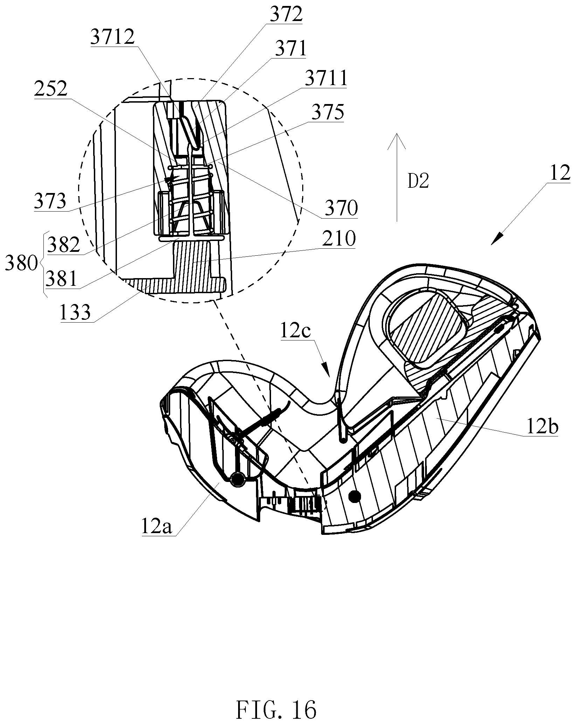

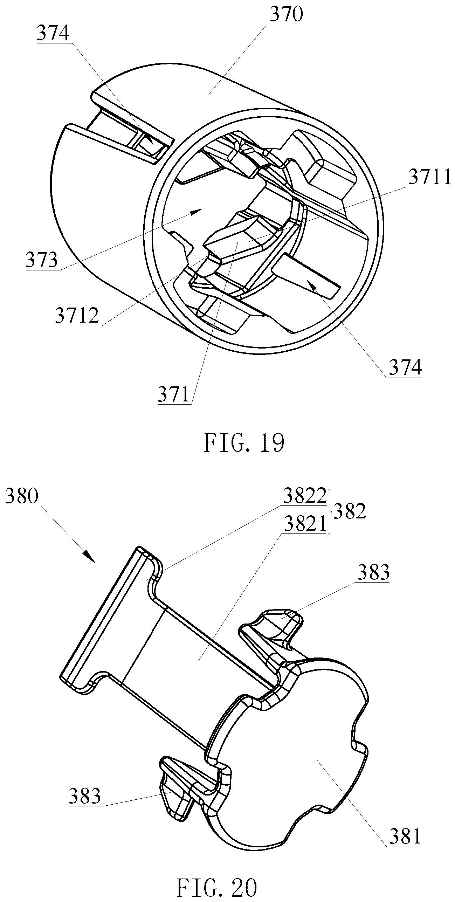

Further, as shown in FIG. 16, FIG. 17, and FIG. 19, the limiting sleeve 370 is fixedly arranged on the bottom surface of the seat portion 12a. The limiting sleeve 370 has a roughly cylindrical structure. The limiting sleeve 370 is provided with a third receiving groove 373 passing therethrough. A side wall of the limiting sleeve 370 is provided with two guide holes 374 oppositely arranged and in communication with the third receiving groove 373. An extension direction of the guide hole 374 is parallel to an axial direction of the limiting sleeve 370. An inner wall of the guide hole 374 is provided with two jacking slopes 371 oppositely arranged and two hitting portions 372 oppositely arranged. Each jacking slope 371 is approximately located between the guide hole 374 and the hitting portion 372 on the corresponding side.

Further, as shown in FIG. 16, FIG. 17, and FIG. 20, the jacking member 380 is movably arranged in the limiting sleeve 370. The jacking member 380 includes a jacking base 381 and an elastic rib 382 and a guide member 383 arranged on a surface of the jacking base 381. Specifically, the elastic rib 382 includes an elastic body 3821 and a jacking protrusion 3822 connected to each other. The elastic body 3821 has a roughly rectangular sheet structure and has an end connected to the jacking base 381. Two jacking protrusions 3822 are provided and are convexly arranged on two sides at an end portion of the elastic body 3821 away from the jacking base 381. Two guide members 383 are provided and are respectively arranged on two sides of the elastic body 3821. The jacking member 380 is mounted in the third receiving groove 373 of the limiting sleeve 370, and the two guide members 383 are at least partially inserted into the two guide holes 374 and can slide along the two guide holes 374 respectively. In this way, a sliding stroke of the jacking member 380 in the limiting sleeve 370 can be limited, and the jacking member 380 can always move along the axial direction of the limiting sleeve 370.

Further, as shown in FIG. 16 and FIG. 17, the jacking member 380 is movable between a third position and a fourth position. The jacking slope 371 has a first end 3711 close to the guide hole 374 and a second end 3712 away from the guide hole 374. An inclined direction of the jacking slope 371 is interleaved with the extension direction of the guide hole 374. When the jacking member 380 is at the third position, the elastic rib 382 abuts against the jacking slope 371. When the jacking member 380 is at the fourth position, the elastic rib 382 crosses the second end 3712 of the jacking slope 371 and is located on a side of the second end 3712 away from the first end 3711. That is, the elastic rib 382 no longer abuts against the jacking slope 371. When the waist belt body 131 (or the safety belt body 100) is at a tightened state, the waist belt body 131 pulls the fixed buckle 133 to move along the second direction D2, so as to push the jacking member 380 along the second direction D2 via the pushing member 210 arranged on the fixed buckle 133, so that the jacking member 380 moves from the third position to the fourth position. In this process, the elastic rib 382 of the jacking member 380 abuts against the jacking slope 371 in the limiting sleeve 370 and gradually elastically deforms. When the jacking member 380 moves to the fourth position, the two jacking protrusions 3822 arranged on two sides of the elastic body 3821 lose an abutting effect of the jacking slope 371, and then hits, under an elastic force of the elastic body 3821, the hitting portion 372 of the limiting sleeve 370 to generate a reminder sound similar to "click" as a reminder signal.

Further, as shown in FIG. 15 to FIG. 17, the fourth reset assembly 250 causes the jacking member 380 to move in a direction opposite to the second direction D2. Specifically, the fourth reset assembly 250 includes a first elastic member 251 and a second elastic member 252. The first elastic member 251 may be a spring. Two ends of the first elastic member 251 respectively abut against the fixed buckle 133 and the carrier body 10. Specifically, the bottom surface of the seat portion 12a is provided with a limiting protrusion 12a4, one end of the first elastic member 251 sleeves the limiting protrusion 12a4 and abuts against the bottom surface of the seat portion 12a, and the other end of the first elastic member 251 sleeves the limiting column 1331 on the fixed buckle 133 and abuts against the fixed buckle 133, so as to prevent displacement of the first elastic member 251 during deformation. The second elastic member 252 may be a spring. Two ends of the second elastic member 252 respectively abut against the jacking member 380 and the limiting sleeve 370. Specifically, the second elastic member 252 sleeves the elastic rib 382, one end of the second elastic member 252 abuts against the jacking base 381, the limiting sleeve 370 is further provided with an abutment protrusion 375, and the other end of the second elastic member 252 abuts against the abutment protrusion 375, so as to prevent displacement of the second elastic member 252 during deformation. At the same time, the arrangement of the first elastic member 251 and the second elastic member 252 facilitates the fixed buckle 133 to move smoothly along the second direction D2 or the direction opposite to the second direction D2.

In this way, when the waist belt body 131 is tightened, i.e., switches from a slack state to a tightened state, as shown in FIG. 16 to FIG. 17, the waist belt body 131 pulls the fixed buckle 133 to move along the second direction D2, so as to push the jacking member 380 along the second direction D2 via the pushing member 210 arranged on the fixed buckle 133, so that the jacking member 380 moves from the third position to the fourth position. In this process, the elastic rib 382 of the jacking member 380 abuts against the jacking slope 371 in the limiting sleeve 370 and gradually elastically deforms. The first elastic member 251 and the second elastic member 252 are also compressed and elastically deform in this process. When the jacking member 380 moves to the fourth position, the two jacking protrusions 3822 arranged on two sides of the elastic body 3821 lose an abutting effect of the jacking slope 371, and then hits, under an elastic force of the elastic body 3821, the hitting portion 372 of the limiting sleeve 370 to generate a reminder sound similar to "click" as a reminder signal, to remind the caregiver that the waist belt body 131 has been tightened in place.

However, when the waist belt buckle 132 (or the shoulder belt buckle 112) is unfastened from the crotch belt buckle or the waist belt body 131 is stretched and released, as shown in FIG. 17 to FIG. 16, the fixed buckle 133 moves in the direction opposite to the second direction D2 under elastic forces of the first elastic member 251 and the second elastic member 252, so that the jacking member 380 is reset from the fourth position to the third position.

The safety belt assembly 20 and the carrier body 10 achieve at least the following technical effects.

In the safety belt assembly 20 applied to the child carrier, when the safety belt body 100 is in the tightened state, the safety belt body 100 can be linked to the driving mechanism 200, and drive, via the driving mechanism 200, the reminder mechanism 300 connected thereto to generate a reminder signal, so that the caregiver can know that the safety belt body 100 has been tightened in place, thereby preventing under-tightening or over-tightening of the safety belt body 100.

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

The above embodiments only describe several implementations of the present disclosure, and their description is specific and detailed, but cannot therefore be understood as a limitation on the patent scope of the present disclosure. It should be noted that those of ordinary skill in the art may further make variations and improvements without departing from the conception of the present disclosure, and these all fall within the protection scope of the present disclosure. Therefore, the patent protection scope of the present disclosure should be subject to the appended claims.

### List of reference numbers

10 carrier body
11 carrier base
12 seat body
12a seat portion
12a1 second penetration hole
12a2 mounting groove
12a3 through hole
12a4 limit protrusion
12b backrest portion
12b1 first penetration hole
12c seating space
20 safety belt assembly
100 safety belt body
110 shoulder belt
111 shoulder belt body
112 shoulder belt buckle
120 crotch belt
121 crotch belt body
130 waist belt
131 waist belt body
132 waist belt buckle
133 fixed buckle
1331 limiting column
140 adjustment belt
150 length adjustment mechanism
200 driving mechanism
210 pushing member
220 rotating seat
221 rotating disk
222 connecting rod
230 mounting rack
231 first mounting plate
232 second mounting plate
233 connecting plate
2331 via hole
240 third reset member
241 sleeve tube
242 first abutment end
243 second abutment end
250 fourth reset assembly
251 first elastic member
252 second elastic member
300 reminder mechanism
310 mounting base
311 fixed plate
3111 indication window
312 mounting body
3121 first receiving groove
3122 limiting groove
3122a first groove portion
3122b second groove portion
3122c first wall
3122d second wall
313: fixed column
3131 fixed hole
320 pushing sleeve
321: driving groove
322 second receiving groove
330 engaging pin
340 pushing rod
341 sleeve column
351 first reset member
352 second reset member
361 first indicator
362 second indicator
370: limiting sleeve
371 jacking slope
3711 first end
3712 second end
372 hitting portion
373 third receiving groove
374 guide hole
375 abutment protrusion
380 jacking member
381 jacking base
382 elastic rib
3821 elastic body
3822 jacking protrusion
383 guide member
101 pivot shaft
102 fastener
D1 first direction
D2 second direction
D3 third direction
D4 fourth direction

## Claims

1. A safety belt assembly (20) applied to a child carrier, the child carrier comprising a carrier body (10), and the safety belt assembly (20) comprising:
a safety belt body (100) configured to restrain a child to the carrier body (10) and switchable between a tightened state and a slack state;
a driving mechanism (200) drivingly connected to the safety belt body (100); and
a reminder mechanism (300);
wherein when the safety belt body (100) is in the tightened state, the driving mechanism (200) is linked to drive the reminder mechanism (300) to generate a reminder signal.

2. The safety belt assembly (20) according to claim 1, wherein the driving mechanism (200) comprises a pushing member (210), and when the safety belt body (100) is in the tightened state, the driving mechanism (200) is linked to push the reminder mechanism (300) via the pushing member (210).

3. The safety belt assembly (20) according to claim 2, wherein the reminder mechanism (300) comprises:
a mounting base (310) fixed to the carrier body (10) and provided with a limiting groove (3122), the limiting groove (3122) having a first wall (3122c) and a second wall (3122d);
a pushing sleeve (320) movably arranged in the mounting base (310) and having a driving groove (321) connected to the limiting groove (3122); and
an engaging pin (330) passing through the limiting groove (3122) and
the driving groove (321) and movable between a first position and a second position, the engaging pin (330) abutting against the first wall (3122c) when at the first position, and the engaging pin (330) abutting against the second wall (3122d) when at the second position;
wherein when the safety belt body (100) is switched to the tightened state, the driving mechanism (200) is linked to push the pushing sleeve (320) along a first direction via the pushing member (210), so that the engaging pin (330) moves from the first position to the second position,
and the engaging pin (330) hits the second wall (3122d) and generates a reminder sound when moving to the second position.

4. The safety belt assembly (20) according to claim 3, wherein the reminder mechanism (300) further comprises:
a pushing rod (340) rotatably and movably arranged in the pushing sleeve (320), and the engaging pin (330) being fixed to one side of the pushing rod (340);
a first reset member (351) pushing against the pushing sleeve (320) in a direction opposite to the first direction; and
a second reset member (352) pushing against the pushing rod (340) in the first direction.

5. The safety belt assembly (20) according to claim 4, wherein two sides of the pushing rod are each provided with the engaging pin (330), two opposite sides of the mounting base (310) are each provided with the limiting groove (3122), two opposite sides of the pushing sleeve (320) are each provided with the driving groove (321), and each of the engaging pins (330) passes through the limiting groove (3122) on the corresponding side and the driving groove (321) on the corresponding side.

6. The safety belt assembly (20) according to claim 3, wherein the limiting groove (3122) is an L-shaped groove, the limiting groove (3122) comprises a first groove portion (3522a) and a second groove portion (3522b) in communication with each other, a groove wall at an end of the first groove portion (3522a) away from the second groove portion (3522b) is the first wall (3122c), a groove wall at an end of the second groove portion (3522b) away from the first groove portion (3522a) is the second wall (3122d), the driving groove (321) is an inclined groove, an extension direction of the first groove portion (3522a) is interleaved with an extension direction of the driving groove (321), and an extension direction of the second groove portion (3522b) is interleaved with the extension direction of the driving groove (321).

7. The safety belt assembly (20) according to claim 2, wherein the driving mechanism (200) further comprises:
a rotating seat (220) rotatably arranged on the carrier body (10) and
connected to the safety belt body (100), the pushing member (210) being arranged on the rotating seat (220) and rotating with the rotating seat (220), and the rotating seat (220) being rotatable between the first rotating position and the second rotating position;
wherein when the safety belt body (100) is in the tightened state, the rotating seat (220) is at the first rotating position, and the pushing member (210) pushes the reminder mechanism (300) to cause the reminder mechanism (300) to generate a reminder signal; and when the safety belt body (100) is in the slack state, the rotating seat (220) is at the second rotating position, and the pushing member (210) is spaced apart from the reminder mechanism (300).

8. The safety belt assembly (20) according to claim 7, wherein the driving mechanism (200) further comprises:
a mounting rack (230) fixed to the carrier body (10);
wherein the rotating seat (220) comprises a rotating disk (221) and a connecting rod (222) fixed to an outer periphery of the rotating disk (221), the rotating disk (221) being pivotally connected to the mounting rack (230) via a pivot shaft (101), and the pushing member (210) is arranged on the outer periphery of the rotating disk (221) and is spaced apart from the connecting rod (222).

9. The safety belt assembly (20) according to claim 8, wherein the driving mechanism (200) further comprises:
a third reset member (240), the third reset member (240) sleeving the pivot shaft (101) and having two ends abutting against the rotating disk (221) and the mounting rack (230) respectively, and the third reset member (240) causing the rotating seat (220) to move towards the second rotating position.

10. The safety belt assembly (20) according to claim 7, wherein the safety belt body (100) comprises a shoulder belt (110) and a crotch belt (120), one end of the crotch belt (120) is connected to the shoulder belt (110), and the other end of the crotch belt (120) is connected to the rotating seat (220);
wherein when the crotch belt (120) is in a tightened state, the rotating seat (220) is at the first rotating position; and when the crotch belt (120) is in a slack state, the rotating seat (220) is at the second rotating position.

11. The safety belt assembly (20) according to claim 10, wherein the reminder mechanism (300) further comprises:
a first indicator (361) and a second indicator (362) arranged on the rotating seat (220) and rotating with the rotating seat (220); and
a mounting base (310) fixedly arranged on the carrier body (10) and having an indication window (3111);
wherein when the rotating seat (220) is at the first rotating position, the first indicator (361) is opposite to the indication window (3111); and
when the rotating seat (220) is at the second rotating position, and the second indicator (362) is opposite to the indication window (3111).

12. The safety belt assembly (20) according to claim 2, wherein the safety belt body (100) comprises a connecting belt and a fixed buckle (133), one end of the connecting belt is fixed to the fixed buckle (133), the pushing member (210) is arranged on the fixed buckle (133), and the reminder mechanism (300) comprises:
a limiting sleeve (370) fixedly arranged on the carrier body (10); and
a jacking member (380) arranged in the limiting sleeve (370) and
movable between a third position and a fourth position;
wherein when the connecting belt is switched to a tightened state, the driving mechanism (200) is linked to push the jacking member (380) along a second direction via the pushing member (210), so that the jacking member (380) moves from the third position to the fourth position, and the jacking member (380) hits the limiting sleeve (370) and generates a reminder sound when moving to the fourth position.

13. The safety belt assembly (20) according to claim 12, wherein the limiting sleeve (370) is provided with a jacking slope (371) and a hitting portion (372), the jacking member (380) has an elastic rib (382), when the jacking member (380) moves from the third position to the fourth position, the elastic rib (382) jacks the jacking slope (371) and deforms, and when the jacking member (380) moves to the fourth position, the elastic rib (382) hits the hitting portion (372) and generates a reminder sound.

14. The safety belt assembly (20) according to claim 12, wherein the driving mechanism (200) further comprises:
a fourth reset assembly (250) causing the jacking member (380) to move in a direction opposite to the second direction.

15. The safety belt assembly (20) according to claim 1, wherein the driving mechanism (200) comprises:
a rotating seat (220) rotatably arranged on the carrier body (10) and connected to the safety belt body (100), the rotating seat (220) being rotatable between a first rotating position and a second rotating position; and
the reminder mechanism (300) comprises:
a first indicator (361) and a second indicator (362) arranged on the rotating seat (220) and rotating with the rotating seat (220); and
a mounting base (310) fixedly arranged on the carrier body (10) and having an indication window (3111);
wherein when the safety belt body (100) is in the tightened state, the rotating seat (220) is at the first rotating position, and the first indicator (361) is opposite to the indication window (3111); and when the safety belt body (100) is in the slack state, the rotating seat (220) is at the second rotating position, and the second indicator (362) is opposite to the indication window (3111).
